Europäisches Patentamt

European Patent Office

Office européen des brevets

(19)

(11) EP 0 852 588 B1

## (12) FASCICULE DE BREVET EUROPEEN

(45) Date de publication et mention
de la délivrance du brevet:
**08.01.2003 Bulletin 2003/02**

(21) Numéro de dépôt: **96932660.2**

(22) Date de dépôt: **27.09.1996**

(51) Int Cl.7: **C08B 3/20**, C08B 3/06

(86) Numéro de dépôt international:
**PCT/FR96/01508**

(87) Numéro de publication internationale:
**WO 97/012917 (10.04.1997 Gazette 1997/16)**

(54) **MICROFIBRILLES DE CELLULOSE A SURFACE MODIFIEE - PROCEDE DE FABRICATION ET UTILISATION COMME CHARGE DANS LES MATERIAUX COMPOSITES**

CELLULOSEMICROFIBRILLE MIT MODIFIZIERTER OBERFLÄCHE-VERFAHREN ZUR HERSTELLUNG UND VERWENDUNG ALS FÜLLSTOFF IN VERBUNDWERKSTOFFEN

SURFACE-MODIFIED CELLULOSE MICROFIBRILS, METHOD FOR MAKING SAME, AND USE THEREOF AS A FILLER IN COMPOSITE MATERIALS

(84) Etats contractants désignés:
**AT BE CH DE DK ES FI FR GB GR IE IT LI LU MC NL PT SE**

(30) Priorité: **29.09.1995 FR 9511688**

(43) Date de publication de la demande:
**15.07.1998 Bulletin 1998/29**

(73) Titulaire: **RHODIA CHIMIE**
**92408 Courbevoie Cédex (FR)**

(72) Inventeurs:
• **CAVAILLE, Jean-Yves**
**F-38640 Claix (FR)**
• **CHANZY, Henri**
**F-38700 La Tronche (FR)**
• **FLEURY, Etienne**
**F-69540 Irigny (FR)**
• **SASSI, Jean-François**
**69270 Couzon au Mont d'Or (FR)**

(74) Mandataire: **Wattremez, Catherine et al**
**Rhodia Services,**
**Direction de la Propriété Industrielle,**
**40, rue de la Haie-Coq**
**93306 Aubervilliers Cedex (FR)**

(56) Documents cités:
WO-A-93/10172          WO-A-95/23824
GB-A- 919 053

• 'Encyclopedia of Polymer Science and Engineering, vol. 3', 1985, JOHN WILEY & SONS, NEW YORK/US Voir pages 102, 158, 166, 167
• YOUNG R.A., ROWELL R.M.: 'Cellulose Structure, Modification and Hydrolysis', 1986, JOHN WILEY & SONS, NEW YORK/US voir page 6

EP 0 852 588 B1

**Description**

L'invention concerne des microfibrilles de cellulose notamment utiles comme charge de renfort ou agent structurant de matériaux composites.

L'invention se rapporte plus particulièrement à des microfibrilles de cellulose à surface modifiée, un procédé de fabrication de celles-ci et leur utilisation comme charge de renfort ou agent structurant pour matériaux composites.

Il est connu d'utiliser des fibres telles que fibres de verre, matière plastique ou carbone comme charge de renfort ou agent structurant dans des matériaux composites. Il a également été proposé d'utiliser des fibres de cellulose de différentes origines comme charge de renfort Ainsi, le brevet européen n° 0 200 409 décrit l'utilisation de fibres cellulosiques d'origine bactérienne comme renfort de matériaux thermodurcissables. La demande de brevet internationale WO 93/10172 décrit l'utilisation de microfibrilles de cellulose d'origine naturelle comme charge de renfort pour les résines thermodurcissables. On peut également citer l'article de P. GATENHOLM et al paru dans J. Appl. Pol. Sc. - vol. 45, 1667-1677 (1992) sous le titre "Biodegradable Natural Composites" décrivant l'utilisation de fibres naturelles et donc biodégradables, telles que les fibres de cellulose, comme charge de renfort pour des matériaux composites à base de polymères biodégradables tels que le polyhydroxybutyrate ou le polyhydroxyvalérate.

WO-A-95 23 824 divulgue une composition comportant une matrice polymère et une charge de microfibrilles de cellulose. Ces microfibrilles sont stabilisées par un traitement à l'acide sulfurique ou à l'acide phosphorique afin de les munir de charges électriques à la surface.

Toutefois, un des problèmes rencontrés dans l'utilisation de telles charges réside dans la difficulté à assurer une bonne dispersion de la charge dans le matériau composite. Le phénomène d'agglomération de la charge est notamment observé avec les fibres de cellulose utilisées comme charge des matrices en résine thermoplastique. Une mauvaise dispersion de la charge dans la matrice d'un matériau composite affecte sérieusement les propriétés mécaniques de celui-ci. Pour améliorer la dispersion des fibres, il a été proposé de modifier chimiquement ou d'hydrolyser les fibres de cellulose. Toutefois, pour obtenir un matériau à propriétés améliorées par des charges de renfort, il est nécessaire d'ajouter une quantité importante de fibres. L'utilisation de microfibrilles permet d'améliorer les propriétés du matériau renforcé avec un faible taux de charge, si les microfibrilles sont convenablement dispersées dans le matériau. Une telle dispersion est souvent difficile à obtenir.

Pour remédier à ces inconvénients, l'invention propose des microfibrilles de cellulose à surface modifiée, et un procédé de fabrication de ces microfibrilles. Les produits de l'invention conservent les propriétés intrinsèques de la cellulose car les microfibrilles sont toujours constituées d'un arrangement de chaînes de cellulose non modifié. Toutefois, elles présentent une surface comportant des espèces chimiques dont la nature est déterminée en fonction de la matrice à renforcer, pour rendre chimiquement compatibles les microfibrilles de cellulose et la matrice dans laquelle elles seront dispersées.

A cet effet, l'invention propose des microfibrilles de cellulose à surface modifiée présentant un rapport UD supérieur à 20, de préférence supérieur à 100, et un diamètre moyen compris entre 1 nm et 50 nm. (L étant la longueur de la microfibrille et D son diamètre moyen). Ces microfibrilles se caractérisent par le fait qu'au moins 25 % en nombre des fonctions hydroxyles présentes à la surface de celles-ci sont estérifiées par au moins un composé organique comprenant au moins une fonction pouvant réagir avec les groupes hydroxyles de la cellulose. Ce composé organique sera appelé dans le reste du texte composé organique estérifiant. Avantageusement le pourcentage d'estérification est d'au moins 50 %.

Les restes organiques provenant des composés organiques estérifiants fixés en surface des microfibrilles assurent une compatibilité de la microfibrille de cellulose avec le milieu dans lequel elle est dispersée.

Ainsi, dans le mode de réalisation préféré de l'invention, quand le reste de composé organique estérifiant est un radical acétique, les microfibrilles à surface modifiée sont compatibles notamment avec l'acétate de cellulose et pourront être avantageusement utilisées comme charge de renfort des matériaux composites à base d'acétate de cellulose, comme cela sera décrit ci-après.

Les microfibrilles de cellulose peuvent être d'origine quelconque, par exemple d'origine végétale, bactérienne, animale, fongique ou amibienne, de préférence végétale, bactérienne ou animale.

Comme exemple de sources animales de cellulose on peut citer les animaux de la famille des tuniciers

Les sources végétales de cellulose peuvent être le bois, le coton, le lin, la ramie, certaines algues, le jute, les déchets des industries agro-alimentaires, ou analogue.

Les microfibrilles sont obtenues à partir des sources cellulosiques citées précédemment par des procédés connus. Ainsi, à titre d'exemple, les microfibrilles de cellulose sont obtenues à partir du bois par traitement de celui-ci avec une solution concentrée de soude pour éliminer la lignine puis individualisation des microfibrilles par homogénéisation en milieu aqueux. Les microfibrilles comprennent de 20 à 1000 chaînes de cellulose organisées de manière parallèle.

Ces microfibrilles sont ensuite traitées par un milieu estérifiant selon un procédé permettant de contrôler le degré d'estérification des microfibrilles.

EP 0 852 588 B1

Ainsi, selon un mode de réalisation de l'invention, les microfibrilles sont dispersées dans un milieu liquide. Ce liquide ne doit pas solubiliser la cellulose, ni avoir un effet sur la structure des microfibrilles de cellulose.

Comme liquides convenables, on peut citer les acides carboxyliques, les hydocarbures halogénés ou non aliphatiques ou aromatiques, les solvants aprotiques polaires, l'éther éthylique. L'acide acétique anhydre ou "glacial" est le milieu préféré.

Après dispersion des microfibrilles, un composé organique estérifiant ou agent d'estérification est ajouté dans le milieu, avec avantageusement un catalyseur et/ou un activateur d'estérification.

Comme agents d'estérification, on peut citer à titre d'exemple les acides carboxyliques, les anhydrides ou halogénures d'acides carboxyliques comprenant un radical hydrocarboné saturé ou insaturé et pouvant comprendre des hétéroatomes.

De préférence, le radical hydrocarboné comprend de 1 à 20 atomes de carbone et est choisi, par exemple, dans le groupe comprenant les radicaux méthyl, éthyl, butyl, propyl, vinyl, les chaînes grasses.

Parmi les agents d'estérification convenables, on peut ainsi citer entre autres, les composés organiques choisis dans le groupe comprenant les anhydrides ou halogénures d'acide acétique, propionique, butyrique, acrylique, méthacrylique et les acides correspondants.

A titre d'agents d'estérification préférés de l'invention, on peut citer, à titre d'exemple, l'anhydride acétique, l'anhydride butyrique, le chlorure d'acétoyle, le chlorure de butanoyle, l'acide acétique.

Les catalyseurs d'estérification convenables pour l'invention sont les catalyseurs acides tels que les acides minéraux ou organiques comme l'acide sulfurique, l'acide perchlorique, les acides trifluroacétique et trichloroacétique, ou les catalyseurs basiques comme les amines tertiaires telles que la pyridine.

Comme agent activateur de la réaction d'estérification de la cellulose, les anhydrides trifluoroacétique, trichloroacétique peuvent être cités à titre d'exemple.

La réaction d'estérification est réalisée pendant une durée déterminée pour obtenir une estérification des groupements hydroxyles présents à la surface des microfibrilles. L'arrêt de l'estérification est obtenu, par exemple, soit par addition d'un composé, avantageusement, de l'eau, rendant inactif l'agent d'estérification soit par refroidissement et/ou dilution du milieu.

Les microfibrilles partiellement estérifiées sont extraites du milieu par tous moyens appropriés, notamment par lyophilisation, centrifugation, filtration ou précipitation. Elles sont ensuite, avantageusement, lavées et séchées.

Les microfibrilles conformes à l'invention présentent à leur surface des groupes hydrocarbonés qui permettent leur dispersion dans des matériaux pouvant être mis en forme pour la réalisation d'articles variés, tels que pièces moulées, films, fibres, fils, joncs, membranes, par exemple.

L'addition de microfibrilles de cellulose à surface modifiée a comme effet l'amélioration des propriétés mécaniques de ces matériaux. Cette utilisation comme charge de renfort est également un objet de la présente invention.

Les microfibrilles conformes à l'invention peuvent également être utilisées comme charge structurante dans des matériaux tels que les peintures, vernis, par exemple.

Les matériaux renforcés ou structurés par des microfibrilles conformes à l'invention, appelés également matériaux composites, sont également des objets de l'invention.

Comme matériaux qui peuvent être renforcés par des microfibrilles conformes à l'invention, on peut citer à titre d'exemple, les esters de cellulose tel que l'acétate de cellulose, les polymères biodégradables tels que les polyhydroxybutyrates, hydroxyvalérates, les résines utilisées en peinture, les colles, les encres.

La modification de surface des microfibrilles de la présente invention permet d'obtenir une très bonne compatibilité entre la charge de renfort et la matrice. Cette compatibilité permet, comme dans l'exemple de l'acétate de cellulose renforcé par des microfibrilles à surface modifiée par des groupements acétates, d'obtenir un matériau composite translucide et même transparent. En outre, elle permet d'obtenir une très bonne dispersion des microfibrilles dans la matrice.

Les microfibrilles de l'invention peuvent être présentes dans les matériaux composites à des concentrations très variables, depuis quelques pour cents en poids jusqu'à 200 % en poids par rapport à la matrice, par exemple.

La dispersion des microfibrilles de l'invention dans la matrice des matériaux composites peut être réalisée selon les procédés connus d'incorporation des charges dans une matrice.

Un des procédés préférés de l'invention consiste à disperser les microfibrilles dans une solution du matériau formant la matrice du matériau composite, puis après mise en forme de la solution, à évaporer le solvant pour obtenir l'article formé. On peut également ajouter dans la solution de matériau formant matrice, les microfibrilles sous forme d'une dispersion dans un liquide avantageusement identique au solvant de la matrice.

Un autre procédé avantageux consiste à introduire les microfibrilles dans le matériau à l'état fondu.

D'autres détails, avantages de l'invention apparaîtront plus clairement au vu des exemples donnés ci-dessous uniquement à titre d'illustration, et à titre indicatif, et des figures annexées dans lesquelles :

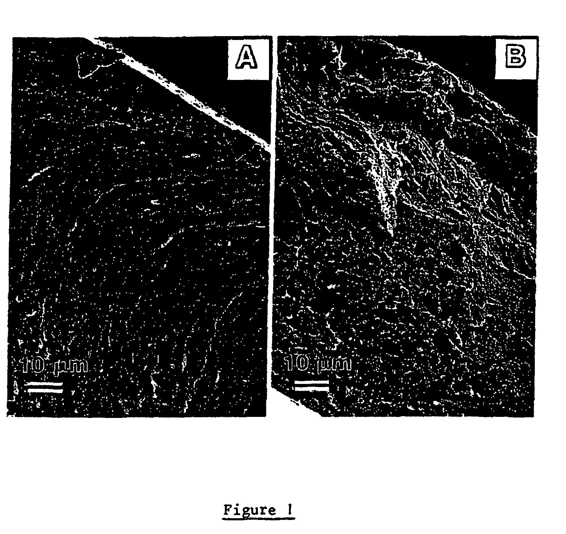

- la figure 1 représente une vue en microscopie électronique à balayage de la rupture d'un film d'acétate de cellulose obtenu à partir d'un collodion dans un mélange d'acide acétique et d'eau : la vue A correspondant à un film non chargé, la vue B correspondant à un film chargé avec 7% en poids de microcristaux de tunicine non acétylés, et

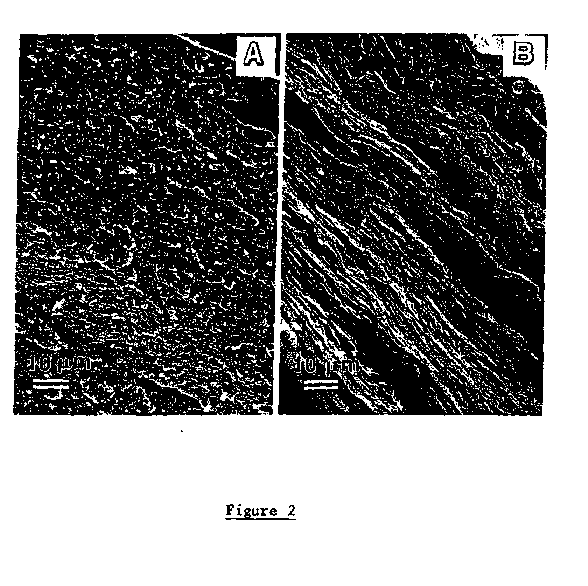

- la figure 2 représente une vue en microscopie électronique à balayage de la rupture d'un film d'acétate de cellulose obtenu à partir d'un collodion dans un mélange d'acide acétique et d'eau : la vue A correspondant à un film non chargé, la vue B correspondant à un film chargé avec 7% en poids de microcristaux de tunicine acétylés conformément à l'invention.

## EXEMPLE 1

Des microfibrilles de cellulose sont obtenues, selon le procédé décrit ci-dessous, à partir de l'enveloppe d'espèces d'animaux marins appartenant à la famille des tuniciers : Halocynthia roretzi, Microcosmus Fulcatus et Halocynthia aurantium.

Les enveloppes sont d'abord nettoyées grossièrement, puis coupées en petits morceaux et blanchies par traitements successifs à la soude et avec une solution de chlorite de sodium. Les morceaux d'enveloppes blanchies sont ensuite désintégrés en suspension dans l'eau distillée par passage dans un mixer.

La suspension de fragments obtenue est diluée à l'eau distillée jusqu'à une concentration de l'ordre de 1 % en masse. Les microfibrilles de cellulose sont tronçonnées par hydrolyse à l'acide sulfurique 65 % en poids à 80°C pendant 30 minutes, en microfibrilles plus individualisées et de longueur plus faible. Ces microfibrilles tronçonnées et individualisées sont souvent appelées des microcristaux. Ce terme sera employé ci-après.

Les microcristaux sont récupérés par filtration et lavage à l'eau. Le gâteau de filtration est redispersé dans l'eau distillée sous agitation mécanique puis par ultrasons. On obtient ainsi une dispersion aqueuse de microcristaux de cellulose.

Les microcristaux de cellulose récupérés en dispersion aqueuse sont ensuite soumis à une estérification partielle par l'anhydride acétique pour obtenir des microcristaux à surface modifiée, conformes à l'invention.

Le procédé d'estérification (acétylation) est décrit ci-dessous :

Les microcristaux de cellulose, récupérés en dispersion aqueuse, sont resuspendus dans l'acide acétique 100 %. Pour ce faire, l'eau est dans un premier temps progressivement remplacée par de l'acide acétique par distillation à l'évaporateur rotatif (température du bain d'eau < 40°C). Lorsque la teneur en acide acétique du milieu devient suffisante, la dispersion est déstabilisée et flocule. Les microcristaux sont alors isolables par centrifugation. Par une succession d'opérations de centrifugation dilution à l'acide acétique 100 %, on atteint une teneur en eau de l'ordre de 0,2 % en masse (d'après les dosages effectués sur la solution sumageante à l'aide d'un coulomètre Karl-Fischer Metrohm, modèle 684, avec cellule sans diaphragme). On obtient ainsi une dispersion floculée de microcristaux de cellulose dans l'acide acétique, qui est le solvant de réaction.

50 g d'une telle dispersion (contenance en cellulose : 0,23 % en masse) sont dilués avec 100 g d'acide acétique 100 % et portés à 60°C sous agitation (700 rpm). 380 µl d'une solution d'acide sulfurique à 4,6 % en masse dans l'acide acétique sont alors ajoutés, avec la quantité nécessaire d'anhydride acétique pour neutraliser les traces d'eau. Après 5 minutes, un mélange constitué de 5 ml d'anhydride acétique 98 % et 5 ml d'acide acétique 100 % est additionné. Au bout de 5 minutes d'acétylation, on observe une redispersion des microcristaux de cellulose dans le milieu réactionnel. La floculation présente en début de réaction disparaît. Des domaines biréfringents (comportement de cristal liquide des microcristaux) peuvent être observés en lumière polarisée. Le milieu réactionnel est alors refroidi dans un bain de glace fondante. 25 ml d'une solution aqueuse d'acide acétique à 80 % en masse sont ajoutés pour détruire l'anhydride acétique résiduel et stopper ainsi l'acétylation des microcristaux.

Les microcristaux acétylées sont séparés du milieu réactionnel par lyophilisation. Ils sont ensuite purifiés par une dialyse contre de l'eau. Après dialyse, ils sont séchés par lyophilisation.

Ces microcristaux présentent les caractéristiques suivantes :

L/D = 100
D = 10 nm
Taux d'acétylation des hydroxyles de surface = 100 %

Le taux d'acétylation est déterminé par spectrophotométrie infrarouge.

Avec ces microcristaux acétylés, un film d'acétate de cellulose renforcé a été obtenu selon le procédé suivant :

200 mg de microcristaux acétylés lyophilisés sont dispersés dans 100 g d'acétone 99,5 % de pureté par agitation vigoureuse, puis sonification.

Un collodion d'acétate de cellulose dans l'acétone est préparé par dissolution de 10 g d'acétate de cellulose commercialisé par la Société Rhône-Poulenc Tubize Plastics dans 90 g d'acétone 99,5 %

Des films renforcés d'acétate de cellulose sont préparés par mélange d'une quantité déterminée de la dispersion acétonique des microcristaux de cellulose dans 10 g de collodion d'acétate de cellulose, le mélange étant versé dans des capsules en verre de 10 cm de diamètre. Le solvant est évaporé à température ambiante puis par séchage à 45°C à l'air. Des films d'environ 100 μm d'épaisseur sont obtenus avec des concentrations pondérales en microcristaux acétylés variables, selon la quantité de dispersion acétonique ajoutée.

A titre comparatif des films d'acétate de cellulose renforcé par les microcristaux obtenus avant acétylation sont préparés selon le mode opératoire suivant.

La dispersion de microcristaux obtenus par traitement des enveloppes de tunicier, avant estérification, est concentrée par évaporation de l'eau. Puis de l'acide acétique à 100 % est ajouté. Une dispersion contenant 0,2 % en poids de microcristaux dans de l'acide acétique à 50 % est obtenue.

Cette dispersion est ajoutée selon des quantités déterminées dans un collodion d'acétate de cellulose à 5 % en masse dans de l'acide acétique à 100 %. Des films sont obtenus selon le procédé décrit précédemment. Les films après évaporation de l'acide acétique par séchage à 45°C présentent une épaisseur d'environ 100 μm.

Les propriétés des films sont déterminées selon les méthodes suivantes.

## Propriétés mécaniques

A l'aide d'un emporte-pièce et d'une presse hydraulique, les films renforcés sont découpés en éprouvettes en forme d'haltères présentant une longueur utile égale à 19 mm, une largeur égale à 4 mm et épaisseur de 0,1 mm. Ces éprouvettes sont placées pendant 4 jours à 25°C dans un dessiccateur contenant une solution aqueuse saturée de nitrate de magnésium [$Mg(NO_3)_2$, 6 $H_2O$]. A cette température, le taux d'humidité au-dessus de la solution saline saturée est de 53 %. Les tests mécaniques sont effectués sur une machine de traction Instron 4301 équipée d'une cellule de 100N. On utilise des mâchoires pneumatiques à mordaches striées permettant d'éviter le glissement de I 'éprouvette au cours de l'essai. Les mesures sont réalisées dans une pièce climatisée (thermostatée à 25°C et conditionnée à 50 % d'humidité). La vitesse de déformation est ajustée à 8,8x10$^{-4}$ s$^{-1}$ et la longueur initiale entre mors à 25 mm. Pour chaque matériau préparé, 6 éprouvettes de traction sont testées.

L'essai de traction permet de déterminer le comportement mécanique d'un matériau pour de grandes déformations. On exerce une force de traction sur le matériau jusqu'à sa rupture, en suivant un processus de mise en charge à vitesse de déformation constante. Au cours de l'essai, on enregistre la force F appliquée à l'échantillon et l'allongement $\Delta l$

La contrainte $\sigma$ est calculée selon l'expression :

$$\sigma = F/S$$

où S représente l'aire de la section de l'éprouvette.

Si l'on admet que le matériau se déforme à volume constant et déformation homogène, l'aire de la section de l'éprouvette est donnée par :

$$S = S_o \times l_o/l$$

dans laquelle $S_o$ et $l_o$ sont les valeurs initiales de l'aire de la section et de la longueur de l'échantillon.

Par ailleurs, la déformation $\varepsilon$ est définie par

$$\varepsilon = \ln (l/l_o) \cong \Delta l/l_o$$

Le module d'élasticité E (ou module d'Young) est donné par la pente à l'origine de la courbe contrainte - déformation.

## Répartition de la charge

La répartition des microcristaux dans le matériau composite est observée par inclusion de petits morceaux de films renforcés dans une résine mélamine commercialisée sous le nom Nanoplast FB101. Les blocs obtenus sont coupés à l'aide d'un couteau diamant à angle 35° selon un plan de coupe perpendiculaire au plan du film. Les sections obtenues d'épaisseur comprise entre 50 et 90 nm sont transférées sur des grilles de cuivre recouvertes d'un film de carbone. Ces coupes sont observées à l'aide d'un microscope électronique à transmission.

La texture du matériau composite est également appréciée par observation au microscope à balayage à émission de champ d'une fracture du film réalisée dans l'azote liquide.

Les films renforcés par les microcristaux acétylés sont plus transparents que les films renforcés par les microcristaux non acétylés.

Par ailleurs, l'observation des fractures dans l'azote liquide illustrée par les figures 1 et 2 respectivement pour les films avec microcristaux acétylés et les films avec microcristaux non acétylés montre que ces demiers s'organisent en feuillets horizontaux.

Au contraire, les films renforcés par les microcristaux acétylés sont homogènes et présentent une bonne dispersion de la charge dans la matrice.

Les propriétés mécaniques des différents films sont rassemblées dans le tableau I ci-dessous :

Tableau I

| % charge | Films avec microcristaux acétylés | | | Films avec microcristaux non acétylés | | |
|---|---|---|---|---|---|---|
| | E (Gpa) | σ (MPa) | Allongement à la rupture (%) | E (GPa) | σ (MPa) | Allongement à la rupture (%) |
| 0 | 2,8 | 72,5 | 12 | 2,8 | 73 | 12 |
| 1 | 3 | 73 | 11 | 3,1 | 73 | 5 |
| 2 | 3,7 | 83 | 10 | 3,15 | 80 | 6 |
| 5 | 4,05 | 100 | 9 | 3,25 | 93 | 5 |
| 7 | 4,2 | 106 | 9 | 3,5 | 97 | 4 |
| E = module d'élasticité<br>σ = contrainte à la rupture | | | | | | |

## EXEMPLE 2

Des microcristaux de cellulose sont préparés à partir de linters de coton selon le mode opératoire ci-dessous:

20 g de linters de coton sont placés dans 1 l d'eau distillée et désintégrés pendant 10 mn à 30 - 40°C dans un mixer Waring "Commercial Blendor". Le broyât est essoré sur un fritté de porosité 2 (Diamètre des pores compris entre 40μm et 90μm). Il est ajouté à 280 ml d'acide sulfurique 65 % en poids préalablement refroidis dans un bain de glace fondante à une température d'environ 5°C (ceci pour éviter un jaunissement trop prononcé du milieu). Le mélange est placé dans un ballon de 500 ml équipé d'une agitation mécanique efficace et transféré dans un bain d'huile à 75°C. Il est maintenu ainsi pendant 30 minutes durant lesquelles la température dans le ballon atteint 70°C. Après dilution par 250 ml d'eau distillée, les microcristaux sont lavés à l'eau distillée par centrifugations successives. Au bout de 3 à 4 cycles, le sumageant demeure turbide. Le contenu du tube de centrifugation est alors dialysé pendant 2 jours. Ensuite, 20 minutes de traitement aux ultrasons (Branson Sonifier modèle B 12) permettent d'obtenir une dispersion aqueuse stable de microcristaux de cellulose de coton. Le rendement de la préparation est d'environ 60 %.

Pour acétyler les microcristaux de coton obtenus ci-dessus, ils doivent être dispersés dans de l'acide acétique glacial. Cette dispersion ou suspension est obtenue par remplacement de l'eau par de l'acide acétique par distillation dans un évaporateur rotatif. L'addition d'acide acétique est arrêtée quand la dispersion est déstabilisée et flocule. Ainsi, les microcristaux sont isolés par centrifugation. La teneur résiduelle en eau est abaissée par des opérations successives de centrifugation (dilution à l'acide acétique à 100 %), jusqu'à une teneur de 0,2 % en poids. On obtient une dispersion floculée de microcristaux dans l'acide acétique pur.

Les microcristaux de cellulose de coton sont acétylés selon le mode opératoire suivant :

50 g d'une dispersion de microcristaux dans l'acide acétique glacial (teneur en cellulose : 1,4 % en masse) sont portés à 45°C sous agitation. Un mélange de 0,11 g d'acide sulfurique 96 %, une quantité nécessaire d'anhydride acétique pour neutraliser les traces d'eau et 4,5 g d'acide acétique 100 % sont alors ajoutés. Après 5 minutes, un mélange constitué de 1,86 g d'anhydride acétique 98 % et 3,60 g d'acide acétique 100 % est additionné. Au bout de 7 minutes d'acétylation, le milieu réactionnel est refroidi dans un bain de glace fondante. 15 ml d'une solution aqueuse d'acide acétique 80 % en poids sont ajoutés pour détruire l'anhydride acétique résiduel et stopper ainsi l'acétylation des microcristaux.

Les microcristaux acétylés sont séparés du milieu réactionnel par lyophilisation puis dialysés contre de l'eau et enfin séchés par lyophilisation.

Les microcristaux ont les caractéristiques suivantes :

L/D = 20 à 100
D = 2à5nm
Taux d'acétylation des hydroxyles de surface = environ 50 %

On prépare des films d'acétate de cellulose selon le procédé décrit à l'exemple 1 par mélange d'une dispersion dans l'acétone des microcristaux acétylés de coton avec un collodion d'acétate de cellulose dans l'acétone.

On constate une augmentation du module de Young qui passe de 2,8 G Pa pour un film d'acétate de cellulose non renforcé à 3,8 G Pa pour un film contenant 20 % en poids de microcristaux de coton acétylés, et 4,4 GPa avec 25 % de charges.

Par contre, la contrainte à la rupture diminue. Ce phénomène s'explique par le rapport L/D faible pour les microcristaux de coton.

## EXEMPLE 3

L'exemple 2 est répété mais en utilisant comme source de cellulose des microfibrilles de cellulose de parenchyme. Les microfibrilles sont obtenues par homogénéisation mécanique des parois de cellules de parenchyme d'où ron a retiré l'hémicellulose et les pectines.

Les microfibrilles de cellulose de parenchyme sont acétylées à température ambiante. 70 g de dispersion acétique de microfibrilles (teneur en cellulose : 0,4 % en masse) sont ajoutés dans un mélange de 11,2g d'acide acétique 100% et 11,2g d'anhydride trifluoroacétique 99%. L'ensemble est porté à 50°C sous agitation. La réaction est stoppée à des temps variables en fonction du taux d'acétylation désiré. Par exemple, l'arrêt doit se faire à t = 4 jours pour obtenir des microfibrilles acétylées à 35 %. A l'instant choisi, l'arrêt est réalisé par addition d'un excès d'acide acétique aqueux (80%).

L'isolation des microfibrilles acétylées de parenchyme sont séparées par lyophilisation et séchées sous vide à 80°C.

Les microfibrilles obtenues ont les caractéristiques suivantes :

L/D : 3000 à 5000

D : 2 à 3 nm

Degré d'acétylation de la surface : environ 57 %

Les films d'acétate de cellulose renforcés par des microfibrilles acétylées de parenchyme sont préparés selon le mode opératoire décrit à l'exemple 2.

Les propriétés mécaniques des films sont rassemblés dans le tableau II ci-après :

Tableau II

| % charge | Films avec microfibrilles acétylées | | | Films avec microfibrilles non acétylées | | |
|---|---|---|---|---|---|---|
| | E (Gpa) | σ (MPa) | Allongement à la rupture (%) | E (GPa) | σ (MPa) | Allongement à la rupture (%) |
| 0 | 2,8 | 79 | 12 | 2,8 | 79 | 12 |
| 2 | 3,4 | 86 | 11 | 4,5 | 91 | 4 |
| 5 | 3,5 | 87 | 11 | - | - | - |
| 7 | 3,8 | 90 | 10 | - | - | - |
| 10 | 4,3 | 95 | 9 | - | - | - |
| E = module d'élasticité σ = contrainte à la rupture | | | | | | |

## EXEMPLE 4 : Dispersion de microcristaux de cellulose

Les microcristaux de cellulose obtenus après blanchiment et tronçonnage par l'acide sulfurique sont dispersables dans de l'eau. De même, les microfibrilles de Parenchyme sont dispersables dans l'eau car elles portent à leur surface des résidus de pectine qui sont chargés. Ces dispersions sont stables, les microcristaux ou microfibrilles pouvant adopter un comportement de cristal liquide. Toutefois ces microcristaux ne sont pas dispersables dans les solvants organiques tels que l'acétone ou l'acide acétique.

Au contraire, les microcristaux à surface modifiée conformes à la présente invention sont dispersables dans l'acétone ou l'acide acétique. Cette dispersibilité peut s'expliquer par les groupements acétyl, dans le cas de microcristaux acétylés, présents à leur surface qui compatibilisent les microcristaux avec le milieu organique. Les microcristaux acétylés ont un comportement de cristal liquide quand ils sont dispersés dans l'acétone.

**Revendications**

1. Microfibrilles de cellulose à surface modifiée présentant un rapport UD supérieur à 20 et un diamètre moyen (D) compris entre 1nm et 50 nm, L représentant la longueur des microfibrilles et D leur diamètre moyen, **caractérisées en ce qu'**elles comprennent de 20 à 1000 chaînes de cellulose organisées de manière parallèle et **en ce qu'**au moins 25 % des fonctions hydroxyles présentes à la surface de la microfibrille sont estérifiées par au moins un composé organique comprenant au moins une fonction pouvant réagir avec les dites fonctions hydroxyles.

2. Microfibrilles selon la revendication 1, **caractérisées en ce qu'**au moins 50 % des fonctions hydroxyles présentes à la surface de la microfibrille sont estérifiées.

3. Microfibrilles selon l'une des revendications 1 ou 2, **caractérisées en ce que** le composé organique comprenant au moins une fonction réagissant avec les fonctions hydroxyles de la cellulose est choisi parmi les anhydrides ou halogénures d'acides carboxyliques comprenant un radical hydrocarboné saturé ou insaturé et pouvant comprendre des hétéroatomes, et les acides carboxyliques correspondants.

4. Microfibrilles selon la revendication 3, **caractérisées en ce que** le radical hydrocarboné comprend de 1 à 20 atomes de carbone.

5. Microfibrilles selon la revendication 4, **caractérisées en ce que** le radical hydrocarboné est choisi dans le groupe comprenant le radical méthyl, éthyl, propyl, butyl, vinyl, les chaînes grasses.

6. Microfibrilles selon l'une des revendications précédentes **caractérisées en ce que** ledit composé organique est choisi dans le groupe comprenant l'anhydride acétique, l'anhydride butyrique, le chlorure d'acétoyle, le chlorure de butanoyle, l'acide acétique .

7. Procédé de fabrication de microfibrilles de cellulose à surface modifiée selon l'une des revendications 1 à 6, à partir de microfibrilles de cellulose obtenues par fibrillation d'un matériau contenant des fibres de cellulose, **caractérisé en ce qu'**il consiste à :

   - disperser les microfibrilles de cellulose dans un milieu liquide et non déstructurant de la microfibrille de cellulose,
   - ajouter dans la dispersion un agent estérifiant des fonctions hydroxyles de la cellulose, et éventuellement un catalyseur et/ou un activateur de la réaction d'estérification,
   - arrêter la réaction d'estérification après obtention du degré d'estérification souhaité,
   - extraire les microfibrilles partiellement estérifiées de la dispersion

8. Procédé selon la revendication 7, **caractérisé en ce que** l'agent d'estérification est un composé organique choisi dans le groupe comprenant les anhydrides ou halogénure d'acide acétique, propionique, butyrique, acrylique, méthacrylique et les acides correspondants.

9. Procédé selon la revendication 7, **caractérisé en ce que** le catalyseur de la réaction d'estérification est choisi dans le groupe comprenant les catalyseurs acides et les catalyseurs basiques.

10. Procédé selon la revendication 9, **caractérisé en ce que** le catalyseur de la réaction d'estérification est choisi dans le groupe comprenant les acides minéraux, organiques et les amines tertiaires.

11. Procédé selon la revendication 9, **caractérisé en ce que** le catalyseur de la réaction d'estérification est choisi dans le groupe comprenant l'acide sulfurique, l'acide perchlorique, les acides trifluroacétique et trichloroacétique, la pyridine.

12. Procédé selon la revendication 7, **caractérisé en ce que** l'activitateur de la réaction d'estérification est choisi dans le groupe comprenant les anhydrides trifluoroacétique, trichloroacétique.

13. Procédé selon la revendication 7, **caractérisé en ce que** le milieu liquide est choisi dans le groupe comprenant les acides carboxyliques, les hydocarbures halogénés ou non aliphatiques ou aromatiques, les solvants aprotiques polaires, l'éther éthylique.

**14.** Procédé selon la revendication 7, **caractérisé en ce que** les microfibrilles à surface modifiée sont extraites de la dispersion par centrifugation, lyophilisation, filtration ou précipitation.

**15.** Utilisation des microfibrilles de cellulose selon l'une des revendications 1 à 6, comme charge de renfort ou agent structurant dans un matériau composite.

**16.** Matériau composite comprenant une matrice et au moins une charge de renfort ou un agent structurant **caractérisé en ce qu'**au moins une partie de la charge de renfort ou de l'agent structurant est constituée par des microfibrilles de cellulose selon l'une des revendications 1 à 6.

**17.** Matériau selon la revendication 16, **caractérisé en ce que** la matrice est choisie dans le groupe comprenant les esters de cellulose, les polymères biodégradables tels que polyhydroxybutyrate, polyhydroxyvalérate.

**18.** Matériau selon la revendication 16, **caractérisé en ce que** la matrice est un acétate de cellulose.

**Claims**

**1.** Cellulose microfibrils with a modified surface, with an L/D ratio of more than 20 and a mean diameter (D) in the range 1 nm to 50 nm, L representing the length of the microfibrils and D their mean diameter, **characterized in that** they comprise 20 to 1000 cellulose chains organized in a parallel manner and **in that** at least 25% of the hydroxyl functions present on the microfibril surface have been esterified by at least one organic compound comprising at least one function that can react with said hydroxyl functions.

**2.** Microfibrils according to claim 1, **characterized in that** at least 50% of the hydroxyl functions present on the microfibril surface have been esterified.

**3.** Microfibrils according to claim 1 or claim 2, **characterized in that** the organic compound comprising at least one function reacting with the hydroxyl functions of the cellulose is selected from anhydrides or halides of carboxylic acids containing a saturated or unsaturated hydrocarbon radical and which may comprise heteroatoms, and from the corresponding carboxylic acids.

**4.** Microfibrils according to claim 3, **characterized in that** the hydrocarbon radical comprises 1 to 20 carbon atoms.

**5.** Microfibrils according to claim 4, **characterized in that** the hydrocarbon radical is selected from the group formed by the methyl, ethyl, propyl, butyl and vinyl radical and fatty chains.

**6.** Microfibrils according to one of the preceding claims, **characterized in that** said organic compound is selected from the group formed by acetic anhydride, butyric anhydride, acetyl chloride, butyryl chloride and acetic acid.

**7.** A process for producing cellulose microfibrils with a modified surface according to one of claims 1 to 6, from cellulose microfibrils obtained by fibrillation of a material containing cellulose fibres, **characterized in that** it consists of:

- dispersing the cellulose microfibrils in a liquid medium that does not de-structure the cellulose microfibrils;
- adding to the dispersion an agent that esterifies hydroxyl functions in the cellulose, and optionally an esterification reaction catalyst and/or an esterification reaction activator;
- stopping the esterification reaction after obtaining the desired degree of esterification;
- extracting the partially esterified microfibrils from the dispersion.

**8.** A process according to claim 7, **characterized in that** the esterification agent is an organic compound selected from the group formed by acetic, propionic, butyric, acrylic and methacrylic acid anhydrides or halides, and the corresponding acids.

**9.** A process according to claim 7, **characterized in that** the esterification reaction catalyst is selected from the group formed by acid catalysts and basic catalysts.

**10.** A process according to claim 9, **characterized in that** the esterification reaction catalyst is selected from the group formed by mineral acids, organic acids and tertiary amines.

**11.** A process according to claim 9, **characterized in that** the esterification reaction catalyst is selected from the group formed by sulphuric acid, perchloric acid, trifluoroacetic acid, trichloroacetic acid and pyridine.

**12.** A process according to claim 7, **characterized in that** the activator for the esterification reaction is selected from the group formed by trifluoroacetic anhydride and trichloroacetic anhydride.

**13.** A process according to claim 7, **characterized in that** the liquid medium is selected from the group formed by carboxylic acids, aliphatic or aromatic, halogenated or non-halogenated hydrocarbons, polar aprotic solvents and ethyl ether.

**14.** A process according to claim 7, **characterized in that** the microfibrils with a modified surface are extracted from the dispersion by centrifuging, freeze drying, filtration or precipitation.

**15.** Use of cellulose microfibrils according to one of claims 1 to 6, as a reinforcing filler or as a structuring agent in a composite material.

**16.** A composite material comprising a matrix and at least one reinforcing filler or a structuring agent, **characterized in that** at least a portion of the reinforcing filler or structuring agent is constituted by cellulose microfibrils according to one of claims 1 to 6.

**17.** A material according to claim 16, **characterized in that** the matrix is selected from the group formed by cellulose esters and biodegradable polymers such as polyhydroxybutyrate or polyhydroxyvalerate.

**18.** A material according to claim 16, **characterized in that** the matrix is a cellulose acetate.

**Patentansprüche**

**1.** Cellulosemikrofibrillen mit modifizierter Oberfläche, die ein Verhältnis L/D größer als 20 und einen mittleren Durchmesser (D) zwischen 1 nm und 50 nm aufweisen, wobei L die Länge der Mikrofibrillen und D ihren mittleren Durchmesser darstellt, **dadurch gekennzeichnet, dass** sie 20 bis 1000 Celluloseketten umfassen, die parallel organisiert sind, und dadurch, dass wenigstens 25% der an der Oberfläche der Mikrofibrille vorhandenen Hydroxylfunktionen verestert sind mit wenigstens einer organischen Verbindung, die wenigstens eine Funktion umfasst, die mit besagten Hydroxylfunktionen reagieren kann.

**2.** Mikrofibrillen gemäß Anspruch 1, **dadurch gekennzeichnet, dass** wenigstens 50% der an der Oberfläche der Mikrofibrille vorhandenen Hydroxylfunktionen verestert sind.

**3.** Mikrofibrillen gemäß einem der Ansprüche 1 oder 2, **dadurch gekennzeichnet, dass** die organische Verbindung, die wenigstens eine Funktion umfasst, die mit den Hydroxylfunktionen der Cellulose reagiert, ausgewählt ist unter den Anhydriden oder Halogeniden von Carbonsäuren, die einen gesättigten oder ungesättigten Kohlenwasserstoffrest umfassen und die Heteroatome umfassen können, und den entsprechenden Carbonsäuren.

**4.** Mikrofibrillen gemäß Anspruch 3, **dadurch gekennzeichnet, dass** der Kohlenwasserstoffrest 1 bis 20 Kohlenstoffatome umfasst.

**5.** Mikrofibrillen gemäß Anspruch 4, **dadurch gekennzeichnet, dass** der Kohlenwasserstoffrest ausgewählt ist aus der Gruppe, die den Methyl-, Ethyl-, Propyl-, Butyl-, Vinylrest und die Fettketten umfasst.

**6.** Mikrofibrillen gemäß einem der vorherigen Ansprüche, **dadurch gekennzeichnet, dass** besagte organische Verbindung ausgewählt ist aus der Gruppe, die Essigsäureanhydrid, Buttersäureanhydrid, Acetylchlorid, Butyrylchlorid, Essigsäure umfasst.

**7.** Verfahren zur Herstellung von Cellulosemikrofibrillen mit modifizierter Oberfläche gemäß einem der Ansprüche 1 bis 6 aus Cellulosemikrofibrillen, die erhalten werden durch Fibrillierung eines Materials, das Cellulosefasern enthält, **dadurch gekennzeichnet, dass** es darin besteht

- die Cellulosemikrofibrillen in einem flüssigen Medium, das die Cellulosemikrofibrille nicht destrukturiert, zu dispergieren,
- zu der Dispersion ein Mittel, das die Hydroxylfunktionen der Cellulose verestert, und gegebenenfalls einen Katalysator und/oder einen Aktivator der Veresterungsreaktion hinzuzufügen,
- die Veresterungsreaktion nach Erhalt des gewünschten Veresterungsgrades anzuhalten,
- die teilweise veresterten Mikrofibrillen aus der Dispersion zu extrahieren.

8. Verfahren gemäß Anspruch 7, **dadurch gekennzeichnet, dass** das Veresterungsmittel eine organische Verbindung ist, die ausgewählt ist aus der Gruppe, die die Anhydride oder Halogenide von Essigsäure, Propionsäure, Buttersäure, Acrylsäure, Methacrylsäure und die entsprechenden Säuren umfasst.

9. Verfahren gemäß Anspruch 7, **dadurch gekennzeichnet, dass** der Katalysator der Veresterungsreaktion ausgewählt ist aus der Gruppe, die die sauren Katalysatoren und die basischen Katalysatoren umfasst.

10. Verfahren gemäß Anspruch 9, **dadurch gekennzeichnet, dass** der Katalysator der Veresterungsreaktion ausgewählt ist aus der Gruppe, die die mineralischen und organischen Säuren und die tertiären Amine umfasst.

11. Verfahren gemäß Anspruch 9, **dadurch gekennzeichnet, dass** der Katalysator der Veresterungsreaktion ausgewählt ist aus der Gruppe, die Schwefelsäure, Perchlorsäure, Trifluor- und Trichloressigsäure, Pyridin umfasst.

12. Verfahren gemäß Anspruch 7, **dadurch gekennzeichnet, dass** der Aktivator der Veresterungsreaktion ausgewählt ist aus der Gruppe, die die Anhydride von Trifluoressigsäure und Trichloressigsäure umfasst.

13. Verfahren gemäß Anspruch 7, **dadurch gekennzeichnet, dass** das flüssige Medium ausgewählt ist aus der Gruppe, die die Carbonsäuren, die halogenierten oder nicht halogenierten, aliphatischen oder aromatischen Kohlenwasserstoffe, die polaren aprotischen Lösungsmittel, Ethylether umfasst.

14. Verfahren gemäß Anspruch 7, **dadurch gekennzeichnet, dass** die Mikrofibrillen mit modifizierter Oberfläche aus der Dispersion durch Zentrifugieren, Lyophilisieren, Filtrieren oder Ausfällen extrahiert werden.

15. Verwendung der Cellulosemikrofibrillen gemäß einem der Ansprüche 1 bis 6 als Verstärkungsfüllstoff oder Strukturierungsmittel in einem Verbundwerkstoff.

16. Verbundwerkstoff umfassend eine Matrix und wenigstens einen Verstärkungsfüllstoff oder ein Strukturierungsmittel, **dadurch gekennzeichnet, dass** wenigstens ein Teil des Verstärkungsfüllstoffs oder des Strukturierungsmittels aus Cellulosemikrofibrillen gemäß einem der Ansprüche 1 bis 6 besteht.

17. Werkstoff gemäß Anspruch 16, **dadurch gekennzeichnet, dass** die Matrix ausgewählt ist aus der Gruppe, die die Celluloseester, die biologisch abbaubaren Polymere, wie Polyhydroxybutyrat, Polyhydroxyvalerat, umfasst.

18. Werkstoff gemäß Anspruch 16, **dadurch gekennzeichnet, dass** die Matrix ein Celluloseacetat ist.

Figure 1

Figure 2